Europäisches Patentamt

European Patent Office

Office européen des brevets

(11) Veröffentlichungsnummer: **0 042 368**
**A1**

(12) **EUROPÄISCHE PATENTANMELDUNG**

(21) Anmeldenummer: 81890023.5

(22) Anmeldetag: 06.02.81

(51) Int. Cl.³: **F 02 D 1/16**, F 16 D 3/10

(30) Priorität: 13.06.80 AT 3153/80

(43) Veröffentlichungstag der Anmeldung: 23.12.81
Patentblatt 81/51

(84) Benannte Vertragsstaaten: DE FR GB

(71) Anmelder: Friedmann & Maier Aktiengesellschaft,
Friedmannstrasse 7, A-5400 Hallein bei Salzburg (AT)

(72) Erfinder: Stipek, Theodor, Altengutrathstrasse 3,
A-5400 Hallein (AT)

(74) Vertreter: Krause, Walter, Dr. Dipl.-Ing.,
Margaretenstrasse 21, A-1040 Wien (AT)

(54) **Einrichtung zur Verstellung des Förderbeginnes einer Brennstoffeinspritzpumpe für Brennkraftmaschinen.**

(57) Einrichtung zur Verstellung des Förderbeginnes einer Brennstoffeinspritzpumpe für Brennkraftmaschinen, wobei zur axialen Verstellung des Fliehkraftreglers (17) samt Muffe (14) ein im Reglergehäuse (29) und an der Antriebswelle (11) abgedichtet geführter Hydraulikkolben (18) vorgesehen ist, der auf einer Seite von einer sich am Reglergehäuse (29) abstützenden Rückstellfeder (38) belastet ist und auf der anderen Seite von einem, von zumindest einer Betriebskenngröße der Brennkraftmaschine, wie z. B. Last, Temperatur oder dgl., abhängigen Druck beaufschlagbar ist.

EP 0 042 368 A1

- 1 -

## Einrichtung zur Verstellung des Förderbeginnes einer Brennstoffeinspritzpumpe für Brennkraftmaschinen

Die Erfindung betrifft eine Einrichtung zur Verstellung des Förderbeginnes einer Brennstoffeinspritzpumpe für Brennkraftmaschinen, bei welcher die die Einspritzpumpe betätigende Welle in einem Reglergehäuse mit einer Antriebswelle über eine Muffe verbunden ist, die über Verzahnungen mit verschiedenen Steigungen mit den beiden Wellen drehgekuppelt ist und die von einem Fliehkraftregler axial verschiebbar ist, wobei die axiale Position der Muffe zusammen mit dem Fliehkraftregler unabhängig von der Stellung der Fliehgewichte verstellbar ist.

Einrichtungen zur Verstellung des Förderbeginnes einer Brennstoffeinspritzpumpe in Abhängigkeit von der Drehzahl sind an sich bekannt. Um für den Fall, wenn beispielsweise die Forderung gestellt wird, daß der Motor mit Brennstoffen, welche verschiedene Verbrennungseigenschaften aufweisen, betrieben werden soll, die Verlegung des Förderbeginnes der Einspritzpumpe zusätzlich zur Abhängigkeit von der Drehzahl auch in Abhängigkeit von anderen Kenngrößen der Brennkraftmaschine variieren zu können, ist z.B. aus der AT-PS 298 881 eine Einrichtung der eingangs genannten Art bekannt, bei welcher die Muffe des drehzahlabhängigen Regelorganes, im besonderen ein Drehzahlmeßwerk mit an der Muffe angreifenden Fliehgewichten, in ihrer Ausgangsstellung relativ zu den beiden Wellen über einen von außen betätigbaren Schwenkhebel willkürlich axial verstellbar ist. Diese axiale Verstellung der Muffe bewirkt über die verschiedenen Steigungen der Verzahnung mit beiden Wellen eine Verstellung des Förderbeginnes der Brennstoffeinspritzpumpe, wodurch ohne Verwendung eines zusätzlichen Aggregates der Regelbereich des Drehzahlreglers verschoben wird, sodaß der Förderbeginn zusätzlich und unabhängig von der Drehzahl in gewünschter Weise verschiedenen Bedingungen angepaßt werden kann. Als Nachteil dieser bekannten Einrichtung ist anzusehen, daß die axiale Verstellung des Fliehkraftreglers bzw. der Muffe über den von außen angreifenden Schwenkhebel relativ aufwendig ist, und daß insbesonders eine kontinuierliche derartige Verstellung zur laufenden Berücksichtigung einer weiteren Betriebskenngröße der Brennkraftmaschine nur schwer möglich ist.

Aus der DE-OS 2 716 696 ist eine Einrichtung zur Änderung des Einspritzzeitpunktes einer Kraftstoffeinspritzpumpe bekannt, welche zusätzlich zu der über einen Fliehkraftregler bewirkten drehzahlabhängigen Änderung der Drehlage der beiden Wellen zueinander auch eine Änderung dieser Lage und damit des Einspritzzeitpunktes abhängig von einer weiteren Betriebskenngröße der Brennkraftmaschine ermöglicht. Dies geschieht bei dieser bekannten Einrichtung durch die hydraulische Verstellung des einen Angriffspunktes der die Fliehgewichte des Drehzahlreglers belastenden Federn, womit die Vorspannung der Federn geändert wird und über diese Änderung der Regelcharakteristik des Fliehkraftreglers eine zusätzliche Beeinflussung der drehzahlabhängigen Änderung des Einspritzzeitpunktes ermöglicht. Durch die hydraulische Beeinflussung des Fliehkraftreglers ist zwar auf einfache Weise eine kontinuierliche zusätzliche Änderung des Einspritz- bzw. Förderbeginnes der angetriebenen Einspritzpumpe ermöglicht, jedoch ist durch die direkte Überlagerung der Auswirkungen der beiden Kenngrößen, also Drehzahl und z.B. Last der Brennkraftmaschine, eine voneinander unabhängige Verstellung des Förderbeginnes als Reaktion auf die Änderung einer der beiden Kenngrößen praktisch nicht möglich. Weiters wird nach dieser Einrichtung das Arbeitsvermögen des Fliehkraftreglers abhängig von der hydraulisch einwirkenden zweiten Betriebskenngröße der Brennkraftmaschine geändert, was im Hinblick auf die konstruktive Auslegung des Reglers und die Regelcharakteristik ebenfalls nachteilig ist.

Aufgabe der vorliegenden Erfindung ist es, die erwähnten Nachteile der bekannten Einrichtungen zur Verstellung des Förderbeginnes einer Brennstoffeinspritzpumpe für Brennkraftmaschinen zu vermeiden und insbesonders eine Einrichtung der eingangs genannten Art so zu verbessern, daß die drehzahlunabhängige Verstellung der axialen Position der Muffe zusammen mit dem Fliehkraftregler auf einfache Weise kontinuierlich möglich ist.

Dies wird gemäß der Erfindung dadurch erreicht, daß zur axialen Verstellung des Fliehkraftreglers samt Muffe ein im Reglergehäuse und an der Antriebswelle abgedichtet geführter Hydraulikkolben vorgesehen ist, der in an sich bekannter Weise auf einer Seite von einer sich am Reglergehäuse abstützenden Rückstellfeder belastet ist und auf der anderen Seite von einem, von zumindest einer Betriebskenngröße der Brennkraftmaschine, wie z.B. Last, Temperatur od. dgl., abhängigen Druck beaufschlagbar ist. Durch die hydraulische Verstellung der axialen Position des gesamten Fliehkraftreglers samt der die beiden Wellen drehkuppelnden Muffe ist eine kontinuierliche Veränderung der Drehlage der beiden Wellen zueinander in Abhängigkeit von einer weiteren Betriebskenngröße der Brennkraftmaschine möglich, ohne daß dadurch die über die Fliehgewichte des Drehzahlreglers bewirkte drehzahlabhängige Änderung der relativen Drehlage der beiden Wellen zueinander beeinflußt würde. Da der gesamte Fliehkraftregler samt Fliehgewichten und Rückstellfeder zusammen mit der Muffe verschoben wird, ist insbesonders eine Beeinflussung der Vorspannung der Rückstellfeder und damit der Regelcharakteristik sowie des Arbeitsvermögens des Fliehkraftreglers vermieden. Es handelt sich also um zwei voneinander gänzlich unabhängig wirkende Verstelleinrichtungen, welche deshalb auch unabhängig voneinander ausgelegt bzw. justiert werden können. Der Druck des die zusätzliche Verstellung bewirkenden Hydraulikmediums kann z.B. über die Last oder die Temperatur der Brennkraftmaschine bzw. auch über die Stellung des Mengenwählhebels oder das Antriebsdrehmoment der Einspritzpumpe verändert werden. Der Hydraulikkolben wird nur einseitig vom Druckmedium beaufschlagt, was die Steuerung der axialen Verstellung vereinfacht. Weiters ist z.B. auch eine Steuerung des Hydraulikdruckes durch einen Vergleich zwischen Sollwert und Istwert des Verstellwinkels möglich. Dazu wird das Druckmedium über ein mit den Meßwerten von Last und Temperatur sowie dem Istwert der Verstellung versorgtes Steuergerät solange in seinem Wirkdruck erhöht, bis der Sollwert der Verstellung erreicht ist.

In Weiterbildung der Erfindung ist vorgesehen, daß der Fliehkraftregler direkt an dem konzentrisch zur gemeinsamen Achse der die Einspritzpumpe betätigenden Welle und der Antriebswelle angeordneten Hydraulikkolben angebracht ist. Dies ermöglicht eine besonders kompakte Ausführung der gesamten Einrichtung sowie die einfache Unterbringung des Fliehkraftreglers samt der mit den Verzahnungen der beiden Wellen zusammenarbeitenden Muffe und dem Hydraulikkolben in dem gleichzeitig als Hydraulikzylinder wirkenden, öldicht geschlossenen Gehäuse.

Die Erfindung wird im folgenden anhand des in der Zeichnung dargestellten Ausführungsbeispieles näher erläutert.

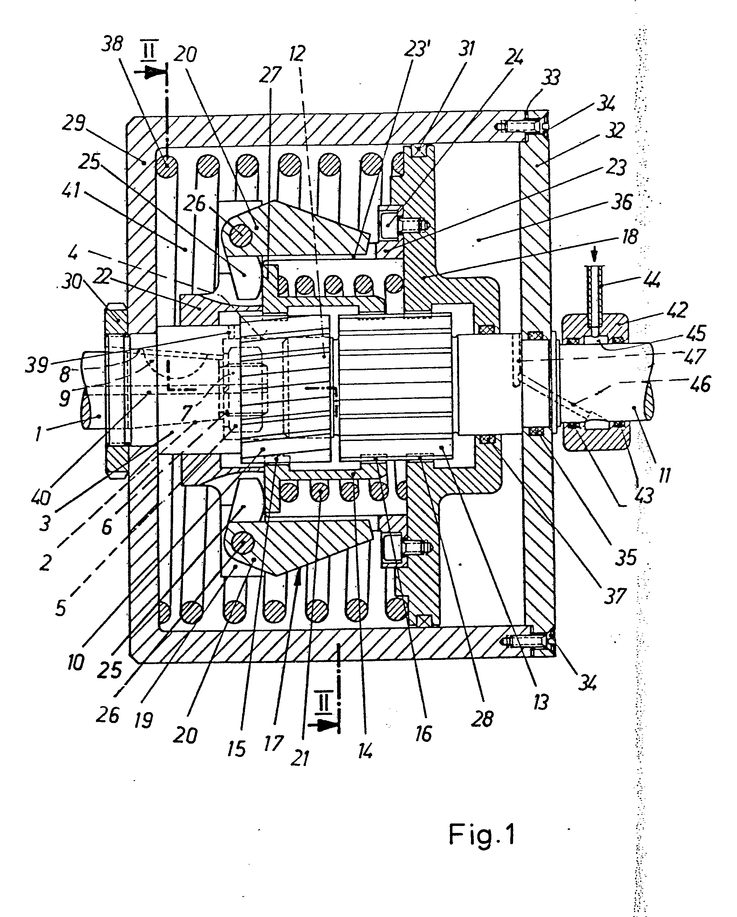

Fig. 1 zeigt einen Querschnitt durch eine erfindungsgemäße Einrichtung zur Verstellung des Förderbeginnes einer Brennstoffeinspritzpumpe und

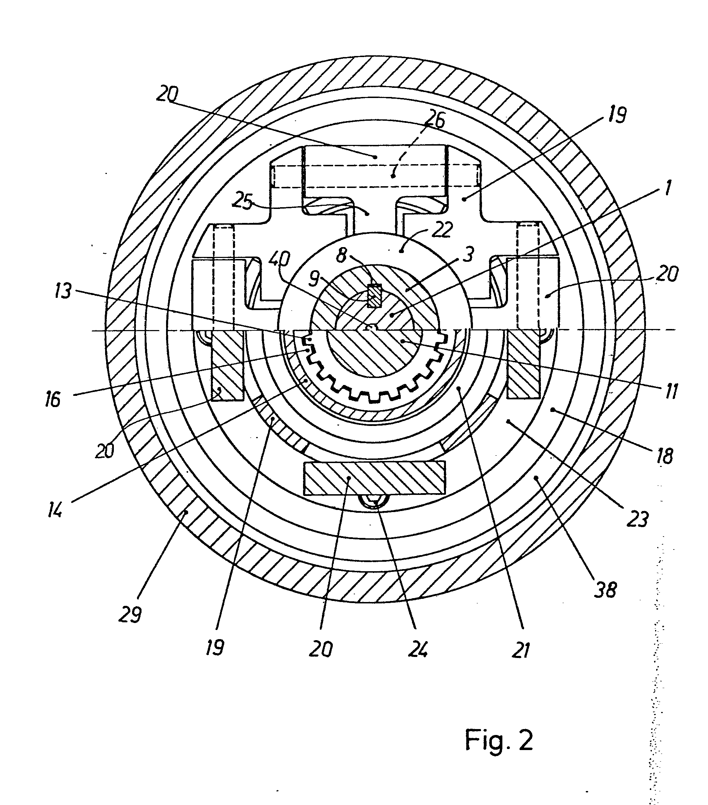

Fig. 2 zeigt einen Schnitt englang der Linie II-II in Fig.1.

Das Ende einer die nicht dargestellte Brennstoffeinspritzpumpe einer Brennkraftmaschine betätigenden Welle 1 weist einen Konus 2 auf, auf welchem eine einen entsprechenden Innenkonus aufweisende Nabe 3 sitzt. In einer stirnseitigen Ausdrehung 4 dieser Nabe 3 ist eine Mutter 5 angeordnet, welche über einen Sicherungsring 6 und zusammenwirkend mit einem Gewindeteil 7 am vorderen Ende der Welle 1 die Nabe 3 gegen den Konus 2 verspannt. Um eine drehfeste Verbindung zwischen der Nabe 3 und der Welle 1 zu sichern, ist zusätzlich eine mit einer Nut 8 im Innenkonus der Nabe 3 zusammenwirkende kreissegmentförmig ausgebildete Feder 9 in einer entsprechenden Ausnehmung im Konus 2 der Welle 1 angebracht. Im Bereich der Ausdrehung 4 weist die Nabe 3 an ihrem Umfang eine leichte Schrägverzahnung 10 auf.

Eine Antriebswelle 11, welche in nicht dargestellter Weise von der Brennkraftmaschine angetrieben wird, weist an ihrem vorderen Ende einen im Inneren der Ausdrehung 4 der Welle 1 konzentrisch drehgelagerten Zapfen 12 und an diesen anschließend eine Geradverzahnung 13 auf. Die Verzahnungen 10 und 13 und damit die beiden Wellen 1 und 11 sind über eine Muffe 14, welche entsprechende Innenverzahnungen 15 und 16 aufweist, die in die Verzahnungen 10 und 13 eingreifen, drehgekuppelt. Dabei ist die relative Drehlage der Antriebswelle 11 zur die Einspritzpumpe betätigenden Welle 1 und damit der Förderbeginn der Einspritzpumpe durch die Veränderung der axialen Lage der Muffe 14 relativ zu den beiden Verzahnungen 10 und 13 variabel, da bei einer Verschiebung der Muffe 14 zwar aufgrund der Geradverzahnung 13 an der Antriebswelle 11 die relative Drehlage zwischen Antriebswelle 11 und Muffe 14 gleich bleibt, sich aber aufgrund der Schrägverzahnung 10 an der Nabe 3 der Welle 1 bzw. der Innenverzahnung 15 der Muffe 14 die relative Drehlage zwischen der Muffe 14 und der Nabe 3 bzw. der Welle 1 um ein von der Schräge der Verzahnungen 10 bzw. 15 und der Größe der Verschiebung der Muffe 14 bestimmtes Maß ändert, was insgesamt zu einer relativen Verdrehung der Wellen 1 und 11 gegeneinander führt. Es wäre auch möglich, anstelle der Geradverzahnung 13 ebenfalls eine Schrägverzahnung vorzusehen; zur Erzielung einer relativen Verdrehung der beiden Wellen zueinander bei Verschiebung der die Verzahnungen übergreifenden Muffe ist es lediglich notwendig, daß die beiden Verzahnungen unterschiedliche Steigungen aufweisen.

Die somit zur Verstellung der relativen Drehlage der beiden Wellen zueinander und damit zur Verstellung des Förderbeginnes der nicht dargestellten Brennstoffeinspritzpumpe erforderliche axiale Verschiebung der Muffe 14 kann durch zwei verschiedene, voneinander völlig unabhängig wirkende Vorgänge erfolgen. Erstens ist dazu ein Fliehkraftregler 17 vorgesehen, der eine drehzahlabhängige axiale Verstellung der Muffe 14 bewirkt und zweitens kann der Fliehkraftregler 17 samt Muffe 14 über einen Hydraulikkolben 18 relativ zu den beiden Verzahnungen 10, 13 verschoben werden, was völlig unabhängig vom Regelzustand des Fliehkraftreglers bzw. der jeweiligen Antriebsdrehzahl ist und wobei über den zur Betätigung des Hydraulikkolbens dienenden Druck die Berücksichtigung von zumindest einer Betriebskenngröße der Brennkraftmaschine, wie z.B. Last, Temperatur, od. dgl. möglich ist.

Der Fliehkraftregler 17 besteht im wesentlichen aus einem Fliehgewichteträger 19, den Fliehgewichten 20 und der zur Rückstellung der Fliehgewichte 20 gegen die Wirkung der drehzahlabhängigen Fliehkraft dienenden Reglerfeder 21. Der Fliehgewichteträger 19 ist an einer Seite mittels eines Kragens 22 gegenüber der Nabe 3 zentriert und weist an der gegenüberliegenden Seite einen Flansch 23 auf, der über den Kragen 23' zur Befestigung des gesamten Fliehkraftreglers 17 am konzentrisch zu den beiden Wellen 1, 11 angeordneten Hydraulikkolben 18 mittels versenkter Schrauben 24 dient. Die vier jeweils gleich ausgebildeten Fliehgewichte 20 sind mittels Bolzen 26 am Fliehgewichteträger 19 in symmetrischer Anordnung zur Achse der beiden Wellen 1, 11 schwenkbar gelagert und weisen Nasen 25 auf, die mit einem Flansch 27 an der Muffe 14 zusammenwirken. Der Flansch 27 ist an der den Nasen 25 gegenüberliegenden Seite von der Reglerfeder 21 belastet, welche sich an
ihrem anderen Ende direkt am Hydraulikkolben 18 abstützt.
Der Hydraulikkolben 18 selbst ist über eine Innenverzahnung 28 mit der Geradverzahnung 13 der Antriebswelle 11
drehgekuppelt und überträgt deren Drehzahl auf den Fliehkraftregler 17.

An dem der Schrägverzahnung 10 gegenüberliegenden Ende der
Nabe 3 ist ein zylindrisches Gehäuse 29 auf die Welle 1
aufgesetzt und mittels einer Ringmutter 30 mitdrehend befestigt. Dieses Gehäuse 29 dient auch gleichzeitig als Zylinder für den Hydraulikkolben 18, welcher an seinem äußeren Umfang mit einer Dichtung 31 gegen die zylindrische
Innenwand des Gehäuses 29 abgedichtet und ansonsten in
diesem in axialer Richtung beweglich ist. An der Seite
des Hydraulikkolbens 18 ist das Gehäuse 29 mit einem Deckel
32 verschlossen, der unter Zwischenlage einer ringförmigen
Dichtung 33 von versenkten Schrauben 34 am Gehäuse 29 befestigt ist und eine mit einer weiteren Dichtung 35 abgedichtete Durchführung für die Antriebswelle 11 aufweist.

Der zwischen Hydraulikkolben 18 und Deckel 32 gebildete
und außen vom Gehäuse 29 begrenzte Druckraum 36 ist am Spalt
zwischen Antriebswelle 11 und Hydraulikkolben 18 mit einer
Ringdichtung 37 abgedichtet, welche bei axialer Bewegung
des Hydraulikkolbens 18 über den entsprechenden Teil an der
Antriebswelle 11 gleitet.

Der Hydraulikkolben 18 ist an der dem Druckraum 36 gegenüberliegenden Seite von einer Rückstellfeder 38 belastet,
weshalb zu seiner Betätigung die einseitige Vorsehung des
mit veränderbarem Druck beaufschlagten Druckraumes 36 ausreicht, wobei über Bohrungen 39 und 40 in der Nabe 3 bzw.
in der Welle 1, welche den bezüglich des Hydraulikkolbens
dem Druckraum 36 gegenüberliegenden Raum 41 mit dem Innenraum der Hydraulikpumpe verbinden, die Druckentlastung
des Raumes 41 gesichert ist.

Über einen sich mit der Antriebswelle 11 nicht mitdrehenden

Zuführteil 42, welcher gegen die Antriebswelle 11 über Dichtungen 43 abgedichtet ist und einen von einer Zuführungsleitung 44 gespeisten Ringraum 45 aufweist, und über zwei mit dem Ringraum 45 in Verbindung stehende Bohrungen 46 und 47 in der Antriebswelle 11 wird dem Druckraum 36 ein Medium, z.B. Drucköl, mit einem von zumindest einer Betriebskenngröße der Brennkraftmaschine, wie z.B. Last, Temperatur od. dgl., abhängigen Druck zugeführt. Eine Änderung des im Druckraum 36 herrschenden Druckes wirkt sich aufgrund der Anordnung des Hydraulikkolbens 18 in einer über die Regelcharakteristik der Rückstellfeder 38 beeinflußten mehr oder weniger großen axialen Verschiebung desselben aus. Da der Fliehkraftregler 17, der über die Nasen 25 seiner Fliehgewichte 20 die axiale Lage der Muffe 14 bestimmt, direkt am Hydraulikkolben 18 befestigt ist, wird durch die axiale Verschiebung des Hydraulikkolbens 18 auch direkt eine axiale Verschiebung der Lage der Muffe 14 bewirkt, und zwar unabhängig von der jeweiligen durch die Drehzahl der Antriebswelle 11 bestimmten relativen Auslenkung der Fliehgewichte. Da bei einer axialen Verstellung der Muffe 14 und damit einer Verstellung der relativen Drehlage der beiden Welle 11 und 1 zueinander über eine Druckänderung im Druckraum 36 beide Widerlager der Reglerfeder 21 in gleicher Weise bewegt werden, wird die Regelcharakteristik des eigentlichen Fliehkraftreglers 17 und dessen Arbeitsvermögen in keiner Weise verändert.

Die beiden Möglichkeiten auf die axiale Lage der Muffe 14 relativ zu den Verzahnungen 10 und 13 einzuwirken, nämlich drehzahlabhängig über die Stellung der Fliehgewichte und drehzahlunabhängig über den Hydraulikdruck im Druckraum 36, können sich also nicht gegenseitig beeinflussen, weshalb die beiden Regelkreise auch voneinander unabhängig ausgelegt und justiert werden können.

0042368

Patentansprüche

1. Einrichtung zur Verstellung des Förderbeginnes einer Brennstoffeinspritzpumpe für Brennkraftmaschinen, bei welcher die die Einspritzpumpe betätigende Welle in einem Reglergehäuse mit einer Antriebswelle über eine Muffe verbunden ist, die über Verzahnungen mit verschiedenen Steigungen mit den beiden Wellen drehgekuppelt ist und die von einem Fliehkraftregler axial verschiebbar ist, wobei die axiale Position der Muffe zusammen mit dem Fliehkraftregler unabhängig von der Stellung der Fliehgewichte verstellbar ist, d a d u r c h   g e k e n n z e i c h n e t, daß zur axialen Verstellung des Fliehkraftreglers (17) samt Muffe (14) ein im Reglergehäuse (29) und an der Antriebswelle (11) abgedichtet geführter Hydraulikkolben (18) vorgesehen ist, der in an sich bekannter Weise auf einer Seite von einer sich am Reglergehäuse (29) abstützenden Rückstellfeder (38) belastet ist und auf der anderen Seite von einem, von zumindest einer Betriebskenngröße der Brennkraftmaschine, wie z.B. Last, Temperatur od. dgl., abhängigen Druck beaufschlagbar ist.

2. Einrichtung nach Anspruch 1, dadurch gekennzeichnet, daß der Fliehkraftregler (17) direkt an dem konzentrisch zur gemeinsamen Achse der die Einspritzpumpe betätigenden Welle (1) und der Antriebswelle (11) angeordneten Hydraulikkolben (18) angebracht ist.

81 01 14
Kr/Fr

0042368

1/2

Fig.1

Fig. 2

Europäisches
Patentamt

**EUROPÄISCHER RECHERCHENBERICHT**

0042368
Nummer der Anmeldung

EP 81 89 0023

| Kategorie | Kennzeichnung des Dokuments mit Angabe, soweit erforderlich, der maßgeblichen Teile | betrifft Anspruch |
|---|---|---|
| | US - A - 3 742 925 (GORDON)  *Spalte 2, Zeile 38 bis Spalte 3, Zeile 35; Figur 1 * | 1 |
| | DE - B - 1 014 386 (K.H.D.)  *Spalte 4, Zeile 63 bis Spalte 5, Zeile 59; Figuren 4,5 * | 1 |
| A | FR - A - 2 019 107 (FIAT)  & DE - A - 1 947 618 | |
| A | FR - A - 1 251 243 (CROUZET) | |
| AD | DE - A - 2 125 684 (FRIEDMANN & MAIER)  & AT - B - 298 881 | |
| AD | FR - A - 2 348 368 (DIESEL KIKI)  & DE - A -2 716 696 | |

**KLASSIFIKATION DER ANMELDUNG** (Int. Cl.³)

F 02 D   1/16
F 16 D   3/10

**RECHERCHIERTE SACHGEBIETE** (Int. Cl.³)

F 02 D
F 16 D

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-09-1981 | HAKHVERDI |

EPA form 1503.1   06.78